(19) Europäisches Patentamt
European Patent Office
Office européen des brevets

(11) **EP 2 847 357 B1**

(12) **EUROPEAN PATENT SPECIFICATION**

(45) Date of publication and mention of the grant of the patent:
**02.01.2019 Bulletin 2019/01**

(21) Application number: **13787656.1**

(22) Date of filing: **24.04.2013**

(51) Int Cl.:
*C21C 1/04* $^{(2006.01)}$   *C21C 5/28* $^{(2006.01)}$
*C21C 5/36* $^{(2006.01)}$   *C21C 5/52* $^{(2006.01)}$
*C22B 9/00* $^{(2006.01)}$   *F27B 14/06* $^{(2006.01)}$
*F27D 11/06* $^{(2006.01)}$   *C21C 7/076* $^{(2006.01)}$
*F27D 99/00* $^{(2010.01)}$

(86) International application number:
**PCT/SE2013/050441**

(87) International publication number:
**WO 2013/169175 (14.11.2013 Gazette 2013/46)**

(54) **SELECTIVE OXIDATION**

SELEKTIVE OXIDATION

OXYDATION SÉLECTIVE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **08.05.2012 SE 1250469**

(43) Date of publication of application:
**18.03.2015 Bulletin 2015/12**

(73) Proprietor: **Uvån Holding AB**
**164 40 Kista (SE)**

(72) Inventors:
• **LUNDSTRÖM, Patrik**
  **S-583 33 Linköping (SE)**
• **LUNDSTRÖM, Per-Åke**
  **S-183 57 Täby (SE)**

(74) Representative: **Johansson, Lars E.**
**Hynell Patenttjänst AB**
**P.O. Box 138**
**683 23 Hagfors (SE)**

(56) References cited:
**EP-A1- 1 493 830    WO-A1-98/04750**
**DE-A1- 2 505 725    US-A- 3 918 692**
**US-A- 3 942 978    US-A- 3 942 978**
**US-A- 3 971 547**

• **M LINDVALL: 'Selective oxidation of Vanadium prior to Iron and Phosphorus' LTU 2006, XP055172075**
• **YE RECOVERY OF VANADIUM FROM LD SLAG 2006, XP055172078**
• **S JONNSON VANADINUTVINNING UR LD-SLAGG 2006, XP055172079**

EP 2 847 357 B1

**Description**

TECHNICAL FIELD

The present invention relates to a method for selective oxidation of one or more metals from an iron melt.

BACKGROUND OF THE INVENTION AND PRIOR ART

Iron that is produced by reduction of iron ore, e.g. in blast furnaces or electrical low-shaft furnaces, contains a number of metallic elements which are also reduced and come to lie in a dilute solution in the iron. Of these, vanadium and titanium are of special interest. Both metals have a high market value but also pose a problem in certain iron alloys, where they form undesired carbides.

A method of recovering vanadium or titanium involves oxidizing these metals by addition of oxygen gas and/or oxides. The aim is to selectively oxidize vanadium and titanium without at the same time oxidizing the iron. Oxidation of iron means that the vanadium oxide/titanium oxide is diluted, which causes difficulties in subsequent treatment for recovering the metals in pure form or as pure oxides. Oxidation of carbon is also undesirable for thermodynamic reasons and in cases where the residual iron is to be used to produce castings.

The oxidation process is nowadays normally carried out in a reactor of the ladle or converter type, where the metal is stirred with the aid of a vibrating table or by injection of gas under the metal surface. Heat is generated by oxygen gas being added. The reaction products that are formed are particularly oxides of iron, vanadium, titanium, manganese and silicon. The oxides float to the surface of the iron bath and, together with possible additives, form a slag.

In recent times, vanadium extraction from LD slag has also attracted great interest, especially in Sweden. In this process, the hot LD slag is reduced in a first step, which results in a metal phase with a high content of vanadium. Thereafter, selective vanadium oxidation is carried out. In a third step, the vanadium-rich slag is reduced in order to produce ferrovanadium. A summary of methods for recovering vanadium in the production of iron and steel is given in report D 816 from the Swedish Steel Producers' Association, Recovery of vanadium from LD slag (Ye, 2006), and in two theses from Luleå University of Technology, Vanadinutvinning ur LD-slagg [Recovery of vanadium from LD slag], (S. Jonsson, LTU 2006:127 CIV) and Selective oxidation of vanadium prior to iron and phosphorus (M. Lindvall, LTU 2006:288 CIV). Further selective metal oxidation processes are also disclosed in US3942978.

A disadvantage of existing methods is that heat is added by, in particular, carbon and iron being oxidized with oxygen. High temperatures then develop locally, which favour oxidation of carbon at the expense of oxidation of vanadium and titanium. It also becomes difficult to regulate the reaction temperature, and cooling means such as scrap and iron oxide often have to be added. Other disadvantages are the low vanadium content and the high proportion of solid iron in the slag, and also splashing, which results in a low yield. The vibrating table is also associated with mechanical problems.

SUMMARY OF THE INVENTION

The object of the present invention is to solve or at least minimize some of the problems mentioned above. In particular, the object of the invention is to improve the yield for the selective oxidation.

According to the invention, this object is achieved through improved control of the reaction conditions. This is achieved by a method as defined in Claim 1.

According to this method, an oxidizing agent is principally used which gives rise to an endothermic reaction or an only weak exothermic reaction, with the temperature of the iron melt being adjusted by means of induction heating.

All oxide is added in the form of easily reducible oxide. Iron ore or other forms of iron oxide are preferably used. The heat balance is maintained by induction heating with a channel-type induction furnace or crucible furnace. The oxide can be added to the bath surface or under the bath surface by injection of the iron oxide. Addition by injection under the bath surface is slightly more complicated from the technical point of view but affords thermodynamic and kinetic advantages, which are discussed below. The oxidation of the desired metal or metals can thus take place locally under optimal conditions.

If FeO is used as oxidizing agent, the reaction can be written as:

$$Me + FeO \rightarrow MeO + Fe$$

where Me is a metal in the iron melt, such as Cr, Mn, Si, Ti, V or Nb, and MeO is the oxide formed and recovered in the slag.

DETAILED DESCRIPTION OF THE INVENTION

The object of the present invention is to recover one or more metals from an iron melt through selective oxidation.

According to the invention, an oxidizing agent is principally used which gives rise to an endothermic reaction, with the temperature of the iron melt being adjusted by means of induction heating. The arrangement for induction heating can be a channel-type inductor, or the inductor may alternatively be of the crucible type. For example, a converter with a channel-type inductor of the kind described in US3971547 can be used.

The invention is defined in the patent claims.

The iron melt is normally a pig iron, but it can also be a low-carbon melt obtained, for example, by reduction of LD slag. In the text below, contents are given in % by weight for solid and liquid elements and in % by volume for gases.

Elements that readily form oxides are said to have a high affinity to oxygen and, by analogy, substances that do not readily form oxides have a low affinity to oxygen. The chemical reaction, in which an element binds oxygen and forms an oxide, is favoured by a high activity of the reactants, i.e. the element and the oxygen source, and a low activity of the reaction product (the oxide). For solutions, the rule is that a substance that is present in a high content has high activity, while a substance that is present in a low content has low activity. To a certain extent, the substances in the solution also affect each other, and the activities increase or decrease to some degree depending on this effect. However, setting the activity of a substance in solution equal to its content is often a valid approximation for dilute solutions. The activity of the reaction product, i.e. of the oxide, is also determined by the content of the oxide and by how it dissolves in other oxides. The easier the substance dissolves with other oxides in the slag, the lower the activity of the substance. The activity of gases is indicated almost exclusively as their partial pressure.

If oxygen is added as oxygen gas, the reaction between a metal and oxygen in an iron solution can be written as

$$Me + \tfrac{1}{2}O_2 \rightarrow MeO$$

If the oxygen is instead added as oxide (here iron oxide), the reaction is written as

$$Me + FeO \rightarrow MeO + Fe$$

The net reaction cannot go further than to equilibrium without stopping, when a certain ratio between the contents (e.g. the activities) of Me and MeO has been reached. This state is described with an equilibrium constant which is unique for different reactions. In the examples above, where oxygen is added as oxygen gas, the following applies for the equilibrium constant K:

$$K = \frac{a_{MeO}}{a_{Me} \cdot a_{O_2}^{\frac{1}{2}}}$$

where $a_{Me}$ is the metal activity, etc. If oxygen is added as iron oxide, the following analogously applies:

$$K = \frac{a_{MeO} \cdot a_{Fe}}{a_{Me} \cdot a_{FeO}}$$

The lower the activity of the reaction product MeO, the further the reaction is driven to the right, and the lower is the equilibrium content of Me.

Superheated steam and/or carbon dioxide can also be used as oxidizing agents, since both of these gases are associated with highly endothermic reactions. Thus, these gases can in part be mixed with pure oxygen gas without jeopardizing the heat balance.

In the above case, the metal Me is divalent, but a number of metals can have several different valency numbers. The reaction with iron oxide can then be written as

$$m Me + n FeO \rightarrow Me_m O_n + n Fe$$

where Me is a metal in the iron melt, such as Cr, Mn, Si, Ti, V or Nb, and $Me_m O_n$ is the oxide that is formed and recovered in the slag. The expression for the equilibrium constant is then modified to

$$K = \frac{a_{Me_m O_n} \cdot a_{Fe}^n}{a_{Me}^m \cdot a_{FeO}^n}$$

In the following example, we discuss the significance of a number of thermodynamic and kinetic factors for the selective oxidation of vanadium. This is because said element is of particular interest in Sweden, since the pig iron from Swedish raw ore contains circa 0.3% V. Of course, the basic considerations apply in the same way for other metals Me that may be found in the iron melt.

Vanadium can be oxidized to vanadium (III), vanadium (IV) and vanadium (V) oxide depending on the conditions. Several valences may be present at the same time. In the following, it is assumed that only vanadium (III) oxide is formed, since vanadium can in principle be assumed to be present as vanadium (III) oxide in the slag obtained. For simplicity, only this oxidation is described.

For oxidation of vanadium in dilute solution of iron with hematite, the following applies:

$$2V + Fe_2O_3 \rightarrow V_2O_3 + 2Fe$$

$$K = \frac{a_{V_2O_3} \cdot a_{Fe}^2}{a_V^2 \cdot a_{Fe_2O_3}}$$

Given certain conditions, the expression for the equilibrium constant can be considerably simplified. It can be assumed in this case that the content and therefore the activity of iron are not appreciably changed during the time of the reaction, and that iron oxide in the form of hematite forms its own phase, and therefore it too has constant activity. Under these conditions, the equilibrium constant can be written as

$$K' = \frac{a_{V_2O_3}}{a_V^2} \approx \frac{[\%V_2O_3]}{(\%V)^2}$$

The symbol K' is used to differentiate the equilibrium constants in the equations above. In the second likeness, we have expressed the activity for vanadium oxide as its content in the slag phase, $[\%V_2O_3]$, and the activity for vanadium as its content in the metal phase, $(\%V)$. We see that the reaction can be driven further to the right if the content of vanadium oxide in the slag can be kept low. In practice, this is done by dissolving the formed vanadium oxide in silicon oxide ($SiO_2$). This equilibrium constant is temperature-dependent.

Thermodynamic calculations can only be used to predict how far a reaction can be driven, and they require that equilibrium is actually achieved. In fact, a very long time is often needed to reach equilibrium, and kinetic barriers if anything determine how far reactions are able to go. In the present case, reactants and products are present in at least two separate phases (iron solution and at least one slag phase). Oxidation of vanadium can therefore only take place at the interface between the phases, and it is a reasonable assumption that the reaction speed is proportional to this surface. Therefore, a comparison of the two proposed methods of adding iron oxide shows that it would be more effective to inject it at the bottom of the reactor rather than to apply it at the top.

To maintain a constant temperature, it is necessary that heat losses are balanced by addition of heat. The heat loss per unit of time is easy to calculate by observing how quickly the temperature decreases if no heat is added. Heat can be added as reaction enthalpies or as electrical energy. In the case in question

(1)  $2V + 3/2O_2 \rightarrow V_2O_3$  $\Delta H = -1093 \text{kJ/mol}$

(2)  $2Fe + 3/2O_2 \rightarrow Fe_2O_3$  $\Delta H = -826 \text{ kJ/mol}$

The reactions (1)-(2) give

$$2V + Fe_2O_3 \rightarrow V_2O_3 + 2Fe \quad \Delta H = -268 \text{ kJ/mol}$$

Heat is thus developed by the reaction. However, account must be taken of the fact that the added iron oxide requires heat for heating purposes. The temperature increase from 300 K to 1500 K can be calculated to require 171 kJ/mol, for which reason the total enthalpy reduction is a negligible 97 kJ/mol. The reaction can therefore be carried out without the occurrence of undesired local temperature peaks. This means, however, that addition of electrical energy is needed to maintain a constant temperature.

Since carbon also has an affinity to oxygen, account must also be taken of the following undesired secondary reaction:

$$3C + Fe_2O_3 \rightarrow 3CO + 2Fe$$

$$K = \frac{a_{CO}^3 \cdot a_{Fe}^2}{a_C^3 \cdot a_{Fe_2O_3}}$$

In analogy with the equilibrium constant for the reaction of vanadium with hematite, the equilibrium constant can be simplified as

$$K = \frac{a_{CO}^3}{a_C^3} = \frac{p_{CO}^3}{(\%C)^3}$$

To shift the equilibrium to the left, there are in principle two options. The first is to work at the highest possible partial pressure of carbon monoxide. In practice, this can be done either by injecting iron oxide deep down in the reactor, in order to increase the ferrostatic pressure, or by closing the vessel such that a high pressure builds up above the bath. The second option is to reduce the equilibrium constant. Since the latter increases monotonically as the temperature increases, it is therefore advantageous to operate at as low a temperature as possible.

In the description above, it is assumed that vanadium in solution behaves ideally, i.e. that its activity is equal to its content and independent of other components in the solution. If this is not so, the expression for the equilibrium has to be modified to

$$K' = \frac{a_{V_2O_3}}{a_V^2} = \frac{f_{V_2O_3} \cdot [\%V_2O_3]}{f_V^2 \cdot (\%V)^2}$$

where $f_V$ and $f_{V_2O_3}$ are the activity coefficients of vanadium and vanadium oxide, respectively. An activity coefficient of less than one means that the equilibrium content of a corresponding component is higher than ideal, and vice versa. While the activity coefficient of vanadium is determined by the desired carbon content in the melt, a slag former that reduces the activity of vanadium oxide can be added in order to drive the reaction to the right.

It may be stated in summary that a number of thermodynamic and kinetic factors have an influence on the selective oxidation of vanadium from pig iron. Some factors that may be mentioned are: composition of the starting slag and final slag, temperature and viscosity, composition and temperature of the pig iron, type of easily reduced oxide, and method of addition.

The strongest effect, however, can be attributed to the temperature, with better conditions being obtained at a low temperature. For this reason, it is advantageous that the carbon content of the iron melt lies around the eutectic point at 4.3% carbon, since the melt temperature is lowest for this composition. If the carbon content is lower or higher, a higher temperature is needed to ensure that all the iron is present in molten form. The carbon content is preferably in the range of 3.7-4.7%. In order to maintain the desired carbon content in the melt bath, carbon can be added at suitable intervals or continuously, preferably on the basis of data from an analysis of waste gas.

The oxidation of the iron melt takes place in a converter, where the temperature of the melt bath is mainly controlled by means of induction heating, since the type and the quantity of easily reducible oxide are chosen so as not to result in a highly exothermic reaction, such as is obtained in blowing with pure oxygen gas. The arrangement for induction heating can be of the channel type or crucible type. The advantage of this heating is not only that the temperature can be controlled in a way that is unsurpassed, but also that the reaction conditions are also considerably improved, resulting in a considerably improved yield of the selective oxidation.

As oxidizing agents, use is preferably made of iron oxide or iron ore. As has already been mentioned, it is also possible to use superheated steam and/or carbon dioxide, since both of these gases are associated with highly endothermic reactions. It is also possible to mix these gases with oxygen gas, provided that there is no uncontrolled increase in temperature. For this reason, the amount of oxygen gas should be limited to 50%, preferably to a maximum of 10%, of the mixture. The absence and/or the limited addition of oxygen gas also results in a less intense development of carbon monoxide, which leads to lower carbon losses and less splash.

The converter can be provided with one or more injection lances and/or bottom nozzles and/or side nozzles in order to permit addition of gases and/or solids. A conventional ceramic-clad injection lance is preferably used. However, it is conceivable to use water-cooled lances or steel pipes of the type used to blow carbon into the melt bath in electric steel furnaces. The one or more lances are preferably introduced through the converter opening. Alternatively or in addition, one or more lances can be introduced through the converter wall, preferably inclined downwards at an angle of 30-60° in relation to the converter wall.

The selective oxidation can take place in several stages with associated removal of slag and formation of new slag. If the pig iron is produced from vanadium-titanium magnetite, it is conceivable to first oxidize titanium and draw off the first slag before vanadium is oxidized in a second stage.

## Claims

1. Method for selective oxidation of one or more of the metals Cr, Ti, V and Nb from an iron melt, comprising the steps of: making available an iron melt in a converter, the iron melt having a carbon content of 3.7-4.7% and containing one or more of the metals Cr, Ti, V and Nb, adding easily reducible oxide to the iron melt in order thereby to oxidize one or more of the metals Cr, Ti, V and Nb, adding carbon intermittently or continuously to the iron melt in order to maintain the carbon content in the range of 3.7-4.7%, wherein the converter is provided with an arrangement for induction heating, by means of which the heat balance can be controlled fully or partially, and maintaining the temperature of the iron melt in the range of 1150 -1450 °C.

2. Method according to Claim 1, in which the arrangement for induction heating is a channel-type inductor or is of the crucible type.

3. Method according to either of the preceding claims, in which the converter is provided with one or more injection lances and/or bottom nozzles and/or side nozzles in order to permit addition of gases and solids, preferably a ceramic-clad injection lance.

4. Method according to any one of the preceding claims, in which the converter opening is provided with a cover, by means of which the converter can be closed such that an overpressure can build up in the converter, the pressure in the converter preferably being in the range of 1-10 atm.

5. Method according to any one of the preceding claims, in which the easily reducible oxide used is an iron oxide or iron ore.

6. Method according to any one of the preceding claims, in which oxygen gas and/or carbon dioxide and/or superheated steam is also used to oxidize said one or more metals from the iron melt, where 0-50%, preferably 0-10%, of the oxygen demand consists of oxygen gas.

7. Method according to any one of the preceding claims, in which carbon is added intermittently or continuously in order to adjust the carbon content of the iron melt, with the aid of data from an analysis of waste gas.

8. Method according to any one of the preceding claims, in which the temperature of the iron bath is 1200-1380°C, preferably 1250-1350°C.

9. Method according to any one of the preceding claims, in which the selective oxidation takes place in several stages, with associated removal of slag and formation of new slag.

10. Method according to any one of the preceding claims, in which the slag obtained comprises at least three of the following components: $CaO$, $MnO$, $Al_2O_3$, $SiO_2$, $MgO$, $V_2O_3$, $V_2O_5$, $TiO_2$, $FeOx$ and $Fe_2O_3$.

11. Method according to any one of the preceding claims, in which the converter is also provided with an arrangement for flushing an inert gas through the melt, preferably a gas flushing brick at the bottom of the converter.

12. Method according to any one of the preceding claims, in which vanadium is recovered through selective oxidation, and in which the V/Si ratio in the slag obtained is preferably at least 1.0 and/or the vanadium content is preferably at least 10%.

## Patentansprüche

1. Verfahren zur selektiven Oxidation eines oder mehrerer der Metalle Cr, Ti, V und Nb aus einer Eisenschmelze, das folgende Schritte umfasst: Bereitstellen einer Eisenschmelze in einem Konverter, wobei die Eisenschmelze einen Kohlenstoffgehalt von 3,7-4,7 % aufweist und eines oder mehrere der Metalle Cr, Ti, V und Nb enthält, Zugeben von leicht reduzierbarem Oxid zu der Eisenschmelze, um dadurch eines oder mehrere der Metalle Cr, Ti, V und Nb zu oxidieren, diskontinuierliches oder kontinuierliches Zugeben von Kohlenstoff zu der Eisenschmelze, um den Kohlenstoffgehalt im Bereich von 3,7-4,7 % zu halten, wobei der Konverter mit einer Anordnung zum Induktionsheizen versehen ist, mittels der die Wärmebilanz ganz oder teilweise gesteuert werden kann, und Halten der Temperatur der Eisenschmelze im Bereich von 1150-1450 °C.

2. Verfahren nach Anspruch 1, wobei die Anordnung zum Induktionsheizen ein Rinneninduktor ist oder vom Tiegeltyp ist.

3. Verfahren nach einem der vorhergehenden Ansprüche, wobei der Konverter mit einer oder mehreren Einspritzlanzen und/oder Bodendüsen und/oder Seitendüsen, um ein Zugeben von Gasen und Feststoffen zu gestatten, vorzugsweise einer keramikbeschichteten Einspritzlanze, versehen ist.

4. Verfahren nach einem der vorhergehenden Ansprüche, wobei die Konverteröffnung mit einer Abdeckung versehen ist, mittels welcher der Konverter derart verschlossen werden kann, dass sich ein Überdruck in dem Konverter aufbauen kann, wobei der Druck in dem Konverter vorzugsweise im Bereich von 1-10 atm liegt.

5. Verfahren nach einem der vorhergehenden Ansprüche, wobei das benutzte leicht reduzierbare Oxid ein Eisenoxid oder Eisenerz ist.

6. Verfahren nach einem der vorhergehenden Ansprüche, wobei auch Sauerstoffgas und/oder Kohlendioxid und/oder überhitzter Dampf benutzt wird, um das eine oder die mehreren Metalle aus der Eisenschmelze zu oxidieren, wobei 0-50 %, vorzugsweise 0-10 %, des Sauerstoffbedarfs aus Sauerstoffgas bestehen.

7. Verfahren nach einem der vorhergehenden Ansprüche, wobei mithilfe von Daten aus einer Analyse von Abgas Kohlenstoff diskontinuierlich oder kontinuierlich zugegeben wird, um den Kohlenstoffgehalt der Eisenschmelze einzustellen.

8. Verfahren nach einem der vorhergehenden Ansprüche, wobei die Temperatur des Eisenbads 1200-1380 °C, vorzugsweise 1250-1350 °C, beträgt.

9. Verfahren nach einem der vorhergehenden Ansprüche, wobei die selektive Oxidation in mehreren Stufen mit einer zugehörigen Entnahme von Schlacke und Ausbildung neuer Schlacke erfolgt.

10. Verfahren nach einem der vorhergehenden Ansprüche, wobei die gewonnene Schlacke wenigstens drei der folgenden Bestandteile umfasst: $CaO$, $MnO$, $Al_2O_3$, $SiO_2$, $MgO$, $V_2O_3$, $V_2O_5$, $TiO_2$, $FeOx$ und $Fe_2O_3$.

11. Verfahren nach einem der vorhergehenden Ansprüche, wobei der Konverter auch mit einer Anordnung zum Durchspülen der Schmelze mit einem Inertgas, vorzugsweise einem Gasspülstein am Boden des Konverters, versehen ist.

12. Verfahren nach einem der vorhergehenden Ansprüche, wobei Vanadium durch selektive Oxidation zurückgewonnen wird und wobei das V/Si-Verhältnis in der gewonnenen Schlacke vorzugsweise wenigstens 1,0 beträgt und/oder der Vanadiumgehalt vorzugsweise wenigstens 10 % beträgt.

**Revendications**

1. Procédé d'oxydation sélective d'un ou plusieurs des métaux Cr, Ti, V et Nb à partir d'une masse fondue de fer, comprenant les étapes consistant à : rendre disponible une masse fondue de fer dans un convertisseur, la masse fondue de fer ayant une teneur en carbone de 3,7 à 4,7% et contenant un ou plusieurs des métaux Cr, Ti, V et Nb, ajouter un oxyde facilement réductible à la masse fondue de fer afin d'oxyder ainsi un ou plusieurs métaux Cr, Ti, V et Nb, ajouter du carbone de manière intermittente ou continue à la masse fondue de fer de façon à maintenir la teneur en carbone à 3.7 à 4,7%, le convertisseur étant muni d'un agencement de chauffage par induction au moyen duquel le bilan thermique peut être commandé entièrement ou partiellement, et de maintien de la température de la masse fondue de fer dans la plage allant de 1150 à 1450°C.

2. Procédé selon la revendication 1, dans lequel le dispositif de chauffage par induction est un inducteur du type à canal ou du type à creuset.

3. Procédé selon l'une ou l'autre des revendications précédentes, dans lequel le convertisseur est muni d'une ou plusieurs lances d'injection et/ou de buses de fond et/ou de buses latérales afin de permettre l'addition de gaz et de solides, de préférence une lance d'injection à revêtement céramique.

4. Procédé selon l'une quelconque des revendications précédentes, dans lequel l'ouverture du convertisseur est munie d'un couvercle au moyen duquel le convertisseur peut être fermé de telle sorte qu'une surpression puisse s'accumuler dans le convertisseur, la pression dans le convertisseur étant de préférence comprise entre 1 et 10 atm.

5. Procédé selon l'une quelconque des revendications précédentes, dans lequel l'oxyde facilement réductible utilisé est un oxyde de fer ou un minerai de fer.

6. Procédé selon l'une quelconque des revendications précédentes, dans lequel de l'oxygène gazeux et/ou du dioxyde de carbone et/ou de la vapeur surchauffée sont également utilisés pour oxyder lesdits un ou plusieurs métaux de la masse fondue de fer, entre 0 à 50%, de préférence entre 0 et 10%, de la demande en oxygène consistant en de l'oxygène gazeux.

7. Procédé selon l'une quelconque des revendications précédentes, dans lequel du carbone est ajouté par intermittence ou en continu afin d'ajuster la teneur en carbone de la masse fondue de fer, à l'aide de données provenant d'une analyse des gaz résiduaires.

8. Procédé selon l'une quelconque des revendications précédentes, dans lequel la température du bain de fer est de 1200 à 1380°C, de préférence de 1250 à 1350°C.

9. Procédé selon l'une quelconque des revendications précédentes, dans lequel l'oxydation sélective a lieu en plusieurs étapes, avec élimination associée des scories et formation de nouvelles scories.

10. Procédé selon l'une quelconque des revendications précédentes, dans lequel les scories obtenues comprennent au moins trois des composants suivants : $CaO$, $MnO$, $Al_2O_3$, $SiO_2$, $MgO$, $V_2O_3$, $V_2O_5$, $TiO_2$, $FeOx$ et $Fe_2O_3$.

11. Procédé selon l'une quelconque des revendications précédentes, dans lequel le convertisseur est également muni d'un agencement pour faire s'écouler un gaz inerte à travers la masse fondue, de préférence une brique d'introduction de gaz au niveau du fond du convertisseur.

12. Procédé selon l'une quelconque des revendications précédentes, dans lequel le vanadium est récupéré par oxydation sélective, et dans lequel le rapport V/Si dans les scories obtenues est de préférence d'au moins 1,0 et/ou la teneur en vanadium est de préférence d'au moins 10%.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 3942978 A

- US 3971547 A

**Non-patent literature cited in the description**

- **YE.** Recovery of vanadium from LD slag. Swedish Steel Producers' Association, 2006
- **S. JONSSON.** Vanadinutvinning ur LD-slagg [Recovery of vanadium from LD slag. Luleå University of Technology, 2006, 127

- **M. LINDVALL.** Selective oxidation of vanadium prior to iron and phosphorus. LTU, 2006, 288